# EUROPÄISCHE PATENTSCHRIFT

(11) **EP 3 839 145 B1**
(45) Veröffentlichungstag und Bekanntmachung des Hinweises auf die Patenterteilung: **19.04.2023**
(21) Anmeldenummer: 20207727.7
(22) Anmeldetag: 16.11.2020
(51) Int. Cl.: E01C 19/28, B06B 1/16, F16C 19/52, F16C 19/54, F16C 39/02

(54) **UNWUCHTANORDNUNG**
IMBALANCE ARRANGEMENT
SYSTÈME DE BALOURD

(30) Priorität: 16.12.2019 DE 102019134453
(43) Veröffentlichungstag der Anmeldung: 23.06.2021
(73) Patentinhaber: Hamm AG, 95643 Tirschenreuth (DE)
(72) Erfinder: Meixner, Franz, 95643 Tirschenreuth (DE)
(74) Vertreter: Ruttensperger Lachnit Trossin Gomoll

(56) Entgegenhaltungen:
- DE-A1- 1 952 047
- DE-A1- 2 133 504
- DE-U- 1 990 887
- US-A1- 2015 139 731

## Beschreibung

Die vorliegende Erfindung betrifft eine Unwuchtanordnung, welche beispielsweise dazu eingesetzt werden kann, in einer Bodenbearbeitungswalze einer Bodenbearbeitungsmaschine, wie zum Beispiel Bodenverdichter, eine Kraft zu erzeugen, vermittels welcher die Bodenbearbeitungswalze periodisch beschleunigt wird, beispielsweise um eine im Wesentlichen orthogonal zur Walzendrehachse und im Wesentlichen vertikal gerichtete Vibrationsbewegung der Bodenbearbeitungswalze hervorzurufen und dadurch einen Einfluss auf den Bodenbearbeitungsvorgang zu nehmen.

Aus der DE 11 2017 002 243 T5 ist eine Unwuchtanordnung bekannt, bei welcher an einer Unwuchtwelle zwischen zwei Lagerbereichen eine Unwuchtmassenanordnung vorgesehen ist. Diese Unwuchtmassenanordnung umfasst eine durch eine bezüglich einer Unwuchtachse exzentrische Formgebung bereitgestellte Unwuchtmasse mit bezüglich einer Unwuchtachse exzentrischem Massenschwerpunkt. Aufgrund der im Rotationsbetrieb der Unwuchtwelle im Massenschwerpunkt der Unwuchtmasse wirkenden Fliehkraft verformt sich die Unwuchtwelle, was zu einer starken Belastung der die Unwuchtwelle in den Lagerbereichen drehbar lagernden Lager führt. Um diesem Problem entgegenzutreten, ist die Unwuchtwelle so geformt, dass im nicht rotierenden Zustand der Unwuchtwelle die beiden Lagerbereiche bezüglich einander angewinkelt orientiert sind, so dass jeder der Lagerbereiche eine diesem zugeordnete Unwuchtachse definiert. Aufgrund der vorangehend beschriebenen, im Rotationsbetrieb auftretenden Verformung der Unwuchtwelle werden die beiden Lagerbereiche bezüglich einander verkippt, so dass im Rotationsbetrieb die in den beiden Lagerbereichen definierten Unwuchtachsen einander entsprechen bzw. zueinander koaxial liegen und somit eine übermäßige Lagerbelastung vermieden wird.

Eine Unwuchtanordnung gemäß dem Oberbegriff des Anspruchs 1 ist aus der DE 21 33 504 A1 bekannt. Bei dieser Unwuchtanordnung sind zwischen zwei Lagerbereichen einer Unwuchtwelle Unwuchtmassen in axialem Abstand und ohne Winkelversatz zueinander angeordnet. Zwischen den beiden Unwuchtmassen ist mit einem Winkelversatz von 180° eine Gegen-Unwuchtmasse angeordnet.

Bei einer aus der DE 19 52 047 A1 bekannten Unwuchtanordnung sind beidseits der Lagerbereiche für eine Unwuchtwelle jeweils Unwuchtmassen angeordnet.

Die US 2015/0139731 A1 offenbart eine Unwuchtmasse mit bezüglich der Unwuchtachse veränderbarer Masseverteilung. Bei Bewegung eines bewegbaren Massebereichs bezüglich eines an einer Unwuchtwelle fest angebrachten Massebereichs um eine Unwuchtachse verstärkt in einer von zwei Endstellungen des bewegbaren Massebereichs dieser die durch den fest angebrachten Massebereich bereitgestellte Unwucht. In der anderen der beiden Endstellungen kompensiert der bewegbare Massebereich die durch den fest angebrachten Massebereich bereitgestellte Unwucht teilweise.

Es ist die Aufgabe der vorliegenden Erfindung, eine Unwuchtanordnung zur Erzeugung einer Krafteinwirkung auf eine Bodenbearbeitungswalze einer Bodenbearbeitungsmaschine, wie zum Beispiel Bodenverdichter, vorzusehen, mit welcher bei Einsetzbarkeit für verschiedene Bodenbearbeitungsvorgänge und bei konstruktiv einfacher Ausgestaltung eine übermäßige Lagerbelastung vermieden werden kann.

Erfindungsgemäß wird diese Aufgabe gelöst durch eine Unwuchtanordnung zur Erzeugung einer Krafteinwirkung auf eine Bodenbearbeitungswalze einer Bodenbearbeitungsmaschine, insbesondere Bodenverdichter, gemäß Anspruch 1, umfassend:
- eine in Richtung einer Unwuchtachse langgestreckte und um die Unwuchtachse drehbare Unwuchtwelle mit wenigstens zwei in Richtung der Unwuchtachse in Abstand zueinander angeordneten Lagerbereichen,
- eine Unwuchtmassenanordnung mit wenigstens zwei in Richtung der Unwuchtachse in Abstand zueinander angeordneten, an der Unwuchtwelle vorgesehenen Unwuchtmassen, wobei jede Unwuchtmasse einen zur Unwuchtachse exzentrischen Massenschwerpunkt aufweist,
- eine Gegen-Unwuchtmassenanordnung mit wenigstens einer Gegen-Unwuchtmasse, wobei die wenigstens eine Gegen-Unwuchtmasse einen zur Unwuchtachse exzentrischen Massenschwerpunkt aufweist,
wobei der Massenschwerpunkt der wenigstens einen Gegen-Unwuchtmasse eine von den Axiallagen der Massenschwerpunkte der Unwuchtmassen sich unterscheidende Axiallage aufweist.

Um für verschiedene Bearbeitungsvorgänge die durch die Unwuchtanordnung bereitgestellte Unwucht anpassen zu können, ist wenigstens eine, vorzugsweise jede Unwuchtmasse eine variable Unwuchtmasse mit bezüglich der Unwuchtachse in Umfangsrichtung veränderbarer Masseverteilung und ist wenigstens eine, vorzugsweise jede Gegen-Unwuchtmasse eine variable Gegen-Unwuchtmasse mit bezüglich der Unwuchtachse in Umfangsrichtung veränderbarer Masseverteilung. Diese Veränderung der Masseverteilung in Umfangsrichtung kann beispielsweise durch Veränderung der Drehrichtung der Unwuchtwelle herbeigeführt werden.

Durch diese Positionierung der bzw. aller Gegen-Unwuchtmassen bezüglich der bzw. aller Unwuchtmassen in unterschiedlichen axialen Bereichen wird zunächst erreicht, dass im Rotationszustand der Unwuchtwelle die im Bereich der bzw. jeder Gegen-Unwuchtmasse wirkende Fliehkraft und die im Bereich der Unwuchtmassen wirkenden Fliehkräfte in unterschiedlichen axialen Bereichen auf die Unwuchtwelle einwirken und somit diese in unterschiedlichen axialen Bereichen orthogonal zur Unwuchtachse belasten.

Um diese in unterschiedlichen axialen Bereichen auf die Unwuchtwelle einwirkenden Kräfte nutzen zu können, um das Auftreten von zu Lagerbelastungen führenden Verformungen der Unwuchtwelle soweit als möglich zu vermeiden, ist gemäß den Prinzipien der vorliegenden Erfindung ferner vorgesehen, dass
- ein Massenschwerpunkt der Gegen-Unwuchtmassenanordnung bezüglich eines Massenschwerpunkts der Unwuchtmassenanordnung mit Winkelversatz um die Unwuchtachse angeordnet ist,
   oder
- wenigstens einer der Lagerbereiche axial zwischen einer Gegen-Unwuchtmasse und einer der Unwuchtmassen angeordnet ist.

Jede dieser beiden Maßnahmen hat zur Folge, dass die auf die Unwuchtwelle einwirkenden Fliehkräfte eine eine Verformung der Unwuchtwelle vermeidende, einander kompensierende Wirkung entfalten.

Bei einer Ausgestaltung, bei der die verformungskompensierende Einwirkung der Fliehkräfte dadurch erreicht werden soll, dass der Massenschwerpunkt der Gegen-Unwuchtmassenanordnung bezüglich des Massenschwerpunkts der Unwuchtmassenanordnung mit Winkelversatz um die Unwuchtachse angeordnet ist, wird weiter vorgeschlagen, dass die Unwuchtmassenanordnung und die Gegen-Unwuchtmassenanordnung axial zwischen einem ersten der Lagerbereiche und einem zweiten der Lagerbereiche angeordnet sind. Durch den bei dieser Ausgestaltung auch vorhandenen Winkelversatz belasten die auf die Unwuchtwelle einwirkenden Fliehkräfte diese in verschiedenen Richtungen, so dass eine Verformungskompensation erreicht werden kann.

Um dabei eine möglichst effiziente Verformungskompensation zu erreichen, wird vorgeschlagen, dass der Winkelversatz im Bereich von 180° ist. Die auf die Unwuchtwelle einwirkenden Fliehkräfte wirken daher orthogonal zur Unwuchtachse einander diametral entgegen.

Um dabei die im Bereich der Gegen-Unwuchtmassenanordnung im Rotationsbetrieb generierte Fliehkraft bei möglichst geringer Masse der Gegen-Unwuchtmassenanordnung effizient nutzen zu können, wird vorgeschlagen, dass die Gegen-Unwuchtmassenanordnung axial zwischen einer ersten der Unwuchtmassen und einer zweiten der Unwuchtmassen angeordnet ist.

Um eine gleichmäßige Belastung im Bereich der Lagerungsbereiche zu erreichen, können ein Massenschwerpunkt der ersten Unwuchtmasse zu dem ersten Lagerbereich und ein Massenschwerpunkt der zweiten Unwuchtmasse zu dem zweiten Lagerbereich den gleichen Axialabstand aufweisen.

Da durch die Unwuchtmassen im Rotationsbetrieb möglichst effizient eine Fliehkrafteinwirkung generiert werden soll, wird weiter vorgeschlagen, dass ein Massenschwerpunkt der ersten Unwuchtmasse und ein Massenschwerpunkt der zweiten Unwuchtmasse bezüglich einander keinen Winkelversatz um die Unwuchtachse aufweisen.

Insbesondere bei symmetrischer Anordnung der Unwuchtmassen zwischen den beiden Lagerbereichen kann eine bezüglich der Lagerbereiche entsprechend symmetrische Krafteinwirkung im Bereich der Gegen-Unwuchtmassenanordnung dadurch erreicht werden, dass der Massenschwerpunkt der Gegen-Unwuchtmassenanordnung zu dem ersten Lagerbereich und dem zweiten Lagerbereich den gleichen Axialabstand aufweist.

Um zu vermeiden, dass die durch die Unwuchtmassenanordnung und die Gegen-Unwuchtmassenanordnung eingeführten Unwuchten einander kompensieren, wird vorgeschlagen, dass bei Rotation der Unwuchtwelle eine an der Gegen-Unwuchtmassenanordnung wirkende Fliehkraft kleiner ist als eine an der Unwuchtmassenanordnung wirkende Fliehkraft.

Bei einer Ausgestaltung, bei welcher die verformungskompensierende Einwirkung der Fliehkräfte dadurch erreicht werden soll, dass der wenigstens eine der Lagerbereiche axial zwischen einer Gegen-Unwuchtmasse und einer der Unwuchtmassen angeordnet ist, kann erfindungsgemäß weiter vorgesehen sein, dass ein Massenschwerpunkt dieser Unwuchtmasse und ein Massenschwerpunkt dieser Gegen-Unwuchtmasse bezüglich einander keinen Winkelversatz um die Unwuchtachse aufweisen. Die beidseits eines derartigen Lagerbereichs dann im Rotationsbetrieb wirkenden Fliehkräfte können einander kompensieren, so dass eine Verformung der Unwuchtwelle vermieden wird.

Um im Bereich beider bzw. aller Lagerbereiche diese Wirkung erzielen zu können, wird vorgeschlagen, dass ein erster der Lagerbereiche und ein zweiter der Lagerbereiche jeweils axial zwischen wenigstens einer der Unwuchtmassen und wenigstens einer Gegen-Unwuchtmasse angeordnet sind.

Die vorliegende Erfindung betrifft ferner eine Bodenbearbeitungswalze für eine Bodenbearbeitungsmaschine, insbesondere Bodenverdichter, umfassend einen in Richtung einer Walzendrehachse langgestreckten und einen Walzeninnenraum umgebenden Walzenmantel und wenigstens eine in dem Walzeninnenraum angeordnete Unwuchtanordnung mit erfindungsgemäßem Aufbau.

Um zur Erzeugung einer Krafteinwirkung auf den Walzenmantel die bzw. jede Unwuchtwelle in Drehung versetzen zu können, kann dieser ein Unwuchtantrieb zum Antreiben der Unwuchtwelle zur Drehung um die Unwuchtachse zugeordnet sein.

Insbesondere zum Erzeugen von Vibrationsbewegungen, also im Wesentlichen orthogonal zur Walzendrehachse orientierten Bewegungen bzw. Beschleunigungen der Verdichterwalze, kann die Unwuchtachse der Walzendrehachse entsprechen.

Die Erfindung betrifft ferner eine Bodenbearbeitungsmaschine, beispielsweise Bodenverdichter, mit einer erfindungsgemäß aufgebauten Bodenbearbeitungswalze. Die vorliegende Erfindung wird nachfolgend mit Bezug auf die beiliegenden Figuren detailliert beschrieben. Es zeigt:
- Fig. 1: in prinzipartiger Darstellung eine Unwuchtanordnung;
- Fig. 2: eine Längsschnittansicht einer Bodenbearbeitungswalze mit einer darin vorgesehenen Unwuchtanordnung;
- Fig. 3: eine Schnittdarstellung einer variablen Unwuchtmasse für eine erfindungsgemäß aufgebaute Unwuchtanordnung;
- Fig.4: eine Schnittdarstellung einer variablen Gegen-Unwuchtmasse für eine erfindungsgemäß aufgebaute Unwuchtanordnung;
- Fig. 5: eine der Fig. 1 entsprechende prinzipartige Darstellung einer alternativen Ausgestaltungsart einer Unwuchtanordnung;
- Fig. 6: eine als Bodenverdichter ausgebildete Bodenbearbeitungsmaschine.

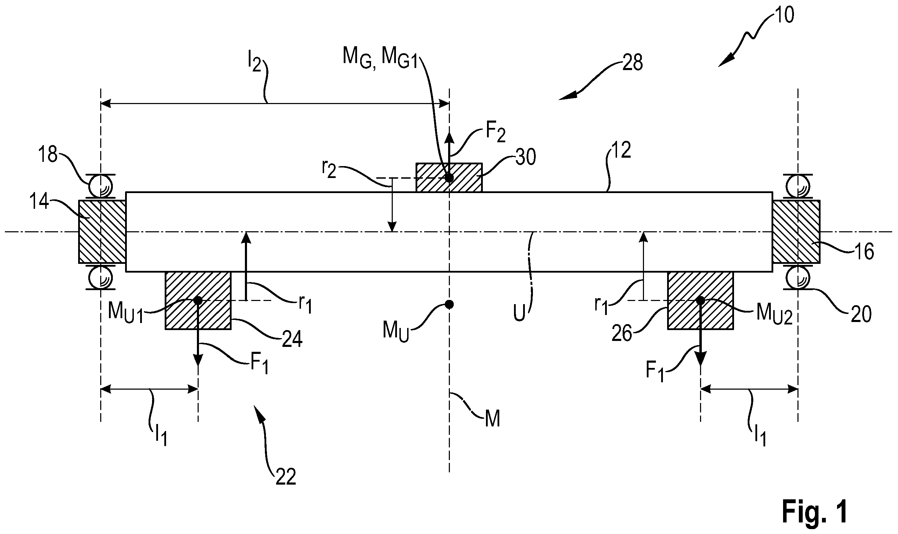

In Fig. 1 ist eine Unwuchtanordnung für eine Bodenbearbeitungswalze einer Bodenbearbeitungsmaschine allgemein mit 10 bezeichnet. Die Unwuchtanordnung 10 umfasst eine Unwuchtwelle 12, die in ihren beiden dargestellten axialen Endbereichen jeweils einen Lagerbereich 14, 16 aufweist, in welchem die Unwuchtwelle 12 über an diesen Lagerbereichen 14, 16 vorgesehene Lager 18, 20 um eine Unwuchtachse U drehbar gelagert ist.

An der Unwuchtwelle 12 ist eine allgemein mit 22 bezeichnete Unwuchtmassenanordnung vorgesehen. Die Unwuchtmassenanordnung 22 umfasst zwei in axialem Abstand zueinander an der Unwuchtwelle 12 vorgesehene Unwuchtmassen 24, 26. Diese können im dargestellten Ausgestaltungsbeispiel als starre Unwuchtmassen ausgebildet sein, also als Masseteile, die an der Unwuchtwelle 12 unbewegbar angeordnet, beispielsweise durch Verschraubung festgelegt sein können oder beispielsweise mit der Unwuchtwelle 12 integral ausgebildet sein können.

Jede der Unwuchtmassen 24, 26 stellt einen Masseschwerpunkt M_{U1} bzw. M_{U2} bereit, so dass aufgrund der axialen Beabstandung der beiden Unwuchtmassen 24, 26 ein Massenschwerpunkt Mu der Unwuchtmassenanordnung 22 im Bereich der axialen Mitte M der Unwuchtwelle 12 positioniert ist. Dazu trägt insbesondere bei, dass die beiden Massenschwerpunkte M_{U1}, M_{U2} der beiden Unwuchtmassen 24, 26 zu den diesen jeweils näher liegenden Lagerbereichen 14 bzw. 16, beispielsweise deren axiale Mitte, den gleichen Axialabstand I₁ aufweisen, und dass die beiden Masseschwerpunkte M_{U1}, M_{U2} der beiden Unwuchtmassen 24, 26 bezüglich einander keinen Winkelabstand um die Unwuchtachse U aufweisen. im Rotationsbetrieb der Unwuchtwelle 12 wirken somit im Bereich der beiden Massenschwerpunkte M_{U1}, M_{U2} der Unwuchtmassen 24, 26 jeweils Fliehkräfte F₁, die insbesondere dann, wenn die beiden Unwuchtmassen 24, 26 auch die gleiche Masse aufweisen, zueinander gleich sind.

Da die im Bereich der Unwuchtmassen 24, 26 wirkenden Fliehkräfte F₁ orthogonal zur Unwuchtachse U und in der gleichen Richtung wirken, könnte grundsätzlich eine Verformung der Unwuchtwelle 12 auftreten, welche zur Folge hätte, dass im Bereich der Lager 18, 20 aufgrund der dort entstehenden Schrägstellung der gebogenen Unwuchtwelle 12 eine übermäßige Lagerbelastung entsteht.

Um dies zu vermeiden, ist an der Unwuchtwelle 12 ferner eine Gegen-Unwuchtmassenanordnung 28 vorgesehen. Diese umfasst eine Gegen-Unwuchtmasse 30, die an der Unwuchtwelle 12 so positioniert ist, dass ein Massenschwerpunkt M_{G1} der einzigen vorhandenen Gegen-Unwuchtmasse 30, der in diesem Falle auch einem Massenschwerpunkt M_{G} der gesamten Gegen-Unwuchtmassenanordnung 28 entspricht, im Bereich der axialen Mitte M der Unwuchtwelle 12 liegt. Ferner ist die Gegen-Unwuchtmasse 30 an der Unwuchtwelle 12 beispielsweise durch Festlegung an dieser oder durch integrale Ausgestaltung damit so positioniert, dass der Massenschwerpunkt M_{G1} der Gegen-Unwuchtmasse 30 bzw. der Massenschwerpunkt M_{G} der Gegen-Unwuchtmassenanordnung 28 bezüglich der Massenschwerpunkte M_{U1}, M_{U2} der Unwuchtmassen 24, 26 bzw. dem Massenschwerpunkt Mu der Unwuchtmassenanordnung 22 um die Unwuchtachse U einen Winkelversatz von etwa 180° aufweist. Dies bedeutet, dass im Rotationsbetrieb der Unwuchtwelle 12 aufgrund der am Massenschwerpunkt M_{G1} der Gegen-Unwuchtmasse 30 wirkenden Fliehkraft F₂ im axialen Mittenbereich M der Unwuchtwelle 12 eine orthogonal zur Unwuchtachse U wirkende Kraft entsteht, welche hinsichtlich der Wirkrichtung der im Bereich der Unwuchtmassen 24, 26 jeweils wirkenden Fliehkraft F₁ entgegengerichtet ist. Damit wird einer durch die an den Unwuchtmassen 24, 26 wirkenden Fliehkräfte F₁ generierten Ausbauchung der Unwuchtwelle 24 in der Darstellung der Fig. 1 nach unten entgegengewirkt.

Um dafür zu sorgen, dass trotz der einander entgegenorientierten Fliehkräfte F₁, F₂ die Unwuchtanordnung 10 eine Gesamtunwucht aufweist, ist die Gegen-Unwuchtmassenanordnung 28 bzw. die Gegen-Unwuchtmasse 30 derselben mit geringerer Masse ausgebildet, als die Unwuchtmassenanordnung 22 bzw. in Summe die beiden Unwuchtmassen 24, 26 derselben. Alternativ oder zusätzlich kann vorgesehen sein, dass ein Radialabstand r₂ des Massenschwerpunkts der Gegen-Unwuchtmassenanordnung 28 bzw. der Gegen-Unwuchtmasse 30 derselben zur Unwuchtachse U kleiner ist, als der Radialabstand r₁ der Massenschwerpunkte M_{U1}, M_{U2} der beiden Unwuchtmassen 24, 26 bzw. der dem Radialabstand r₁ entsprechende Radialabstand des Massenschwerpunkts Mu der Unwuchtanordnung 10 zur Unwuchtachse U ist.

Trotz der geringeren Masse der Gegen-Unwuchtmassenanordnung 28 bzw. der Gegen-Unwuchtmasse 30 derselben oder/und des geringeren Radialabstands des Massenschwerpunkts M_{G1} bzw. M_{G} zur Unwuchtachse U, kann die Gegen-Unwuchtmassenanordnung 28 auf die Unwuchtwelle 12 derart einwirken, dass der durch die mit größerer Masse oder/und größerem Radialabstand des jeweiligen Massenschwerpunkts zur Unwuchtachse U ausgebildeten Unwuchtmassen 24, 26 generierten Wirkung im Wesentlichen vollständig entgegenwirken. Hierzu trägt im Wesentlichen bei, dass der Axialabstand I₂ der im Bereich der axialen Mitte M der Unwuchtwelle 12 positionierten Gegen-Unwuchtmassenanordnung 28 bzw. des in diesem Bereich liegenden Massenschwerpunkts M_{G} derselben zu den Lagern 18, 20 größer ist, als der Axialabstand I₁ der Massenschwerpunkte M_{U1}, M_{U2} der Unwuchtmassen 24, 26 zu dem diesem jeweils näher liegenden Lager 18 bzw. 20. Somit entfaltet in Bezug auf beide Lager 18, 20 die Gegen-Unwuchtmassenanordnung 28 eine stärkere Hebelwirkung als jede der beiden Unwuchtmassen 24, 26. Im Idealfall ist die in Bezug auf jedes der beiden Lager generierte Hebelwirkung der Gegen-Unwuchtmassenanordnung 28 exakt so groß, wie die in Bezug auf das jeweils benachbarte Lager generierte Hebelwirkung der Unwuchtmassen 24 bzw. 26.

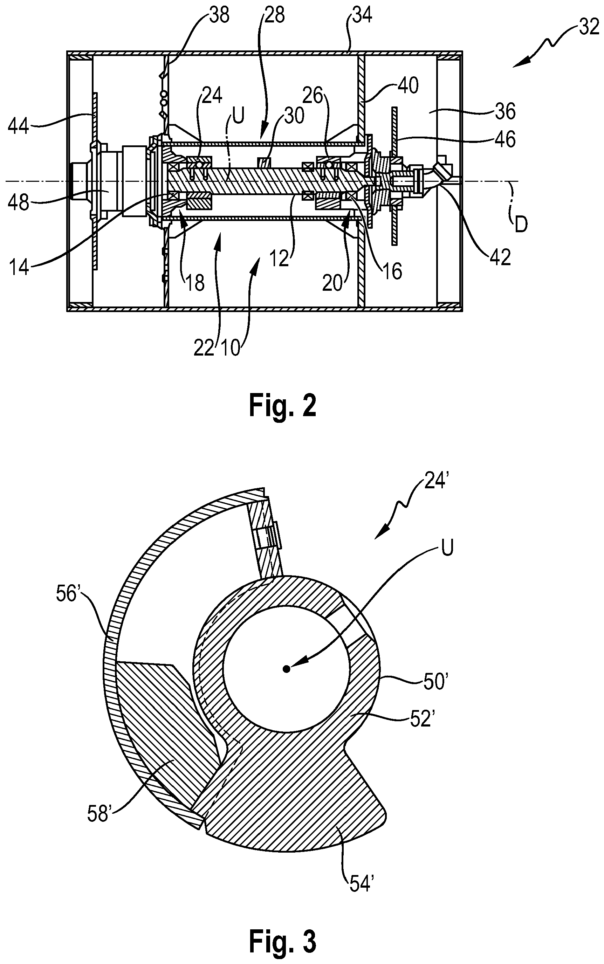

Die Fig. 2 zeigt im Längsschnitt eine als Verdichterwalze ausgeführte Bodenbearbeitungswalze 32. Die Bodenbearbeitungswalze 32 umfasst einen mit Metallmaterial aufgebauten, in Richtung einer Walzendrehachse D langgestreckten Walzenmantel 34. In einem von dem Walzenmantel 34 umgebenen Innenraum 36 sind in axialem Abstand zueinander zwei allgemein als Ronden bezeichnete scheibenartige Träger 38, 40 vorgesehen und durch Verschweißung an eine Innenumfangsfläche des Walzenmantels 34 angebunden. In einem zentralen Bereich der Träger 38, 40 ist die beispielsweise vorangehend mit Bezug auf Fig. 1 beschriebene Unwuchtanordnung 10 positioniert. Die Unwuchtwelle 12 ist in ihren beiden axialen Endbereichen vermittels der Lager 18,20 an den Trägern 38, 40 drehbar getragen. Dabei entspricht die Unwuchtachse U der Walzendrehachse D. Zwischen den beiden Lagern 18,20 und zu diesen jeweils mit gleichem Abstand angeordnet sind die beiden Unwuchtmassen 24, 26 der Unwuchtanordnung 22 an der Unwuchtwelle 12 beispielsweise durch Verschraubung festgelegt. Im Wesentlichen mittig zwischen den beiden Unwuchtmassen 24, 26 und im Wesentlichen auch mittig zwischen den beiden Lagern 18, 20 ist die Gegen-Unwuchtmasse 30 der Gegen-Unwuchtmassenanordnung 28 beispielsweise ebenfalls durch Verschraubung an der Unwuchtwelle 12 festgelegt, und zwar, so wie vorangehend mit Bezug auf die Fig. 1 beschrieben, derart, dass der Massenschwerpunkt der Gegen-Unwuchtmasse 30 bezüglich der Massenschwerpunkte der Unwuchtmassen 24, 26 einen Winkelversatz von etwa 180° um die Unwuchtachse U bzw. die Walzendrehachse D aufweist.

An dem in Fig. 2 rechts dargestellten Ende, also nahe dem Lagerbereich 16, ist die Unwuchtwelle 12 an einen beispielsweise als Hydraulikmotor oder Elektromotor ausgebildeten Unwuchtantrieb 42 angekoppelt, durch welchen die Unwuchtwelle 12 und somit auch die Unwuchtmassenanordnung 22 und die Gegen-Unwuchtmassenanordnung 28 zur Drehung um die Unwuchtachse U antreibbar sind, um dabei bei der Bodenbearbeitungswalze 32 eine so genannte Vibrationsbewegung hervorzurufen.

Axial beidseits der scheibenartigen Träger 38, 40 sind weitere bezüglich der scheibenartigen Träger 38, 40 drehentkoppelte Träger 44, 46 vorgesehen, über welche die Bodenbearbeitungswalze 32 an einem Rahmen einer Bodenbearbeitungsmaschine drehbar aufgehängt werden kann. Dabei kann die Bodenbearbeitungswalze 32 eine angetriebene Walze sein, welche durch einen Walzenantriebsmotor 48, z.B. Hydraulikmotor, zur Drehung um die Walzendrehachse D antreibbar ist, um auf diese Art und Weise eine eine derartige Bodenbearbeitungswalze 32 aufweisende Bodenbearbeitungsmaschine, also beispielsweise einen Bodenverdichter, zum Durchführen eines Verdichtungsvorgangs voran zu bewegen.

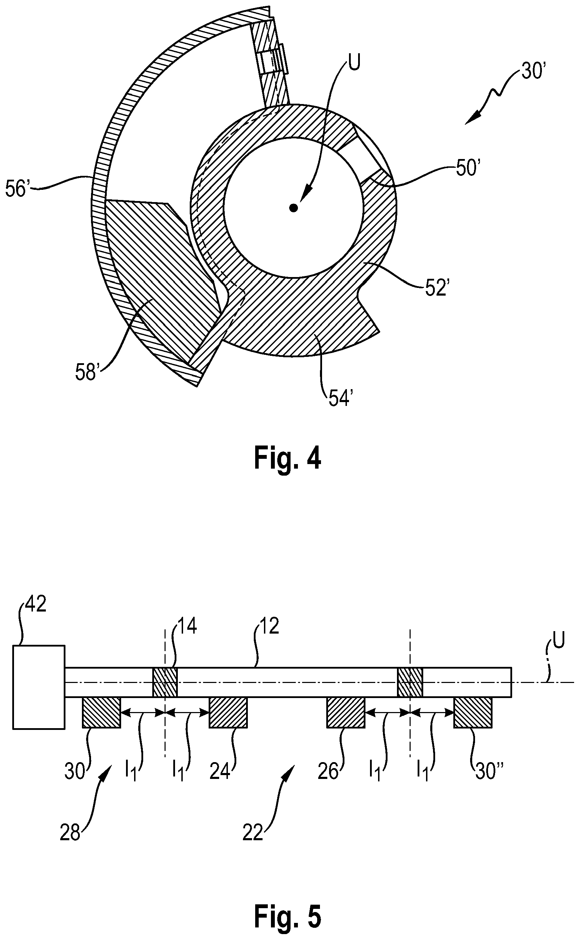

Die Fig. 3 und 4 zeigen eine spezielle Ausgestaltung einer Unwuchtmasse bzw. einer Gegen-Unwuchtmasse, welche, anders als vorangehend mit Bezug auf die Fig. 1 und 2 beschrieben, eine bezüglich der Unwuchtachse U variable Verteilung der Masse aufweisen. Die Fig. 3 zeigt beispielsweise anhand der Unwuchtmasse 24', dass diese einen an der Unwuchtwelle fest anbringbaren Massebereich 50' aufweisen kann. Der Massebereich 50' weist einen ringartigen und die Unwuchtwelle umgebend zu positionierenden Montagebereich 52' auf, durch welchen hindurch ein Befestigungsbolzen in die Unwuchtwelle geschraubt werden kann. Ein radialer Vorsprung 54' und ein mit diesem fest verbundenes Gehäuse 56' definieren einen zur Unwuchtachse U exzentrischen Masseschwerpunkt des an der Unwuchtwelle fest anbringbaren Massebereichs 50'.

In dem Gehäuse 56' ist ein bewegbarer Massebereich 58' aufgenommen. Dieser kann in dem Gehäuse 56' sich in Umfangsrichtung um die Unwuchtachse U zwischen zwei durch Endbereiche des Gehäuses 56' bzw. des fest anbringbaren Massebereichs 50' definierten Endstellungen bewegt werden. Je nachdem, welche der beiden Endstellungen der bewegbare Massebereich 58' der Unwuchtmasse 24' einnimmt, ändert sich einerseits die Lage des Massenschwerpunkts in Umfangsrichtung und andererseits dessen Radialabstand zur Unwuchtachse U. Dies hat zur Folge, dass abhängig von der Lage des bewegbaren Unwuchtbereichs 58' sich die durch die Unwuchtmasse 24' bereitgestellte Unwucht und damit die im Rotationsbetrieb auf den Massenschwerpunkt einwirkende Fliehkraft ändert.

Eine Veränderung der Lage des bewegbaren Unwuchtbereichs 58' kann durch eine Veränderung der Drehrichtung der Unwuchtwelle hervorgerufen werden. In der in Fig. 3 dargestellten Positionierung rotiert die Unwuchtwelle und mit dieser der fest angebrachte Massebereich 50' im Uhrzeigersinn und nimmt den bewegbaren Massebereich 58' zur Bewegung in dieser Richtung mit. Dreht die Unwuchtwelle und damit der fest angebrachte Massebereich 50' sich im Gegen-Uhrzeigersinn, so nimmt der bewegbare Massebereich 58' seine am anderen Umfangsendbereich des Gehäuses 56' definierte zweite Endposition ein, und wird in dieser Positionierung zur Bewegung in Umfangsrichtung mitgenommen.

Es ist darauf hinzuweisen, dass bei dem in Fig. 1 dargestellten Aufbau beide Unwuchtmassen so aufgebaut sein können, wie in Fig. 3 dargestellt und an der Unwuchtwelle wiederum ohne Winkelversatz zueinander angeordnet sein können, was letztendlich bedeutet, dass die beide an der Unwuchtwelle fest anzubringenden Massebereiche 50 ohne Winkelversatz und somit in Umfangsrichtung deckungsgleich zueinander an der Unwuchtwelle anzubringen sind.

Die Fig. 4 zeigt einen entsprechenden Aufbau einer variablen Gegen-Unwuchtmasse 30'. Auch diese weist einen an der Unwuchtwelle fest anzubringenden Massebereich 56' mit einem zentralen, ringartigen Bereich 52' zur Festlegung an der Unwuchtwelle und eine davon nach radial außen vorspringenden Bereich 54' auf. In einem Gehäuse 56' am fest anzubringenden Massebereich 50' ist der in dem Gehäuse 56' in Umfangsrichtung zwischen zwei Anschlagpositionen bewegbare Massebereich 58' vorgesehen.

Man erkennt, dass bei dem in Fig. 4 dargestellten Aufbau einer variablen Gegen-Unwuchtmasse 30' der nach radial außen vorspringende Bereich 54' des fest anzubringenden Massebereichs 50' radial kürzer gestaltet ist, so dass der fest anzubringende Massebereich 50' in seiner Gesamtheit eine geringere Masse und dessen Massenschwerpunkt einen geringen Radialabstand zur Unwuchtachse U aufweist. Auch der bewegbare Massebereich 58' könnte mit geringerer Masse und beispielsweise geringerem Radialabstand seines Masseschwerpunkts zur Unwuchtachse U ausgebildet sein.

Grundsätzlich wirkt die variable Gegen-Unwuchtmasse 30' so, wie vorangehend mit Bezug auf die variable Unwuchtmasse 24' beschrieben. Diese kann bei dem in Fig. 1 dargestellten Aufbau bezüglich der beiden dann auch variabel auszugestaltenden Unwuchtmassen mit einem Winkelversatz im Bereich von 180° angeordnet werden, so dass auch für jede der beiden Endstellung des bewegbaren Massebereichs gewährleistet ist, dass der Massenschwerpunkt der variablen Gegen-Unwuchtmasse bezüglich des Massenschwerpunkts der Unwuchtanordnung, diese dann umfassend zwei variable Unwuchtmassen, einen Winkelversatz von etwa 180° um die Unwuchtachse U aufweist.

Ein weiteres Ausgestaltungsbeispiel einer Unwuchtanordnung 10 ist in Fig. 5 dargestellt. Bei dem in Fig. 5 dargestellten Ausgestaltungsbeispiel sind die beiden Unwuchtmassen 24, 26 der Unwuchtmassenanordnung 22 wieder zwischen den beiden Lagerbereichen 14, 16 der Unwuchtwelle 12 und mit gleichem Axialabstand I₁ zu diesen angeordnet. Die Gegen-Unwuchtanordnung 28 umfasst in diesem Ausgestaltungsbeispiel zwei Gegen-Unwuchtmassen 30, 30", wobei die Gegen-Unwuchtmasse 30 der Unwuchtmasse 24 zugeordnet ist und bezüglich des Lagerbereichs 14 an der anderen axialen Seite, jedoch mit dem gleichen Axialabstand I₁ zu diesem angeordnet ist, während die Gegen-Unwuchtmasse 30" der Unwuchtmasse 26 zugeordnet ist und bezüglich dieser an der anderen axialen Seite des Lagerbereichs 16 angeordnet ist und zu diesem auch den gleichen Axialabstand I₁ aufweist. Jedes Paar aus Unwuchtmasse 24, 26 und Gegen-Unwuchtmasse 30, 30" ist somit bezüglich eines dazwischen jeweils positionierten Lagerbereichs 14, 16 symmetrisch angeordnet, und bei dieser Ausgestaltung sind die Unwuchtmassen 24, 26 und die diesen zugeordneten Gegen-Unwuchtmassen 30, 30" so gestaltet, dass sie bei Rotation der Unwuchtwelle 12 jeweils die gleiche Fliehkraft generieren. Das heißt, dass die Unwuchtmassen 24, 26 und die diesen zugeordneten Gegen-Unwuchtmassen 30, 30" beispielsweise jeweils identisch zueinander aufgebaut sein können.

Um dafür zu sorgen, dass durch die Bereitstellung dieser Paare von Unwuchtmassen 24, 26 und Gegen-Unwuchtmassen 30, 30" im Rotationsbetrieb der Unwuchtwelle 12 eine Verbiegung derselben vermieden wird, sind die Unwuchtmassen 24, 26 und die diesen jeweils zugeordneten Gegen-Unwuchtmassen 30, 30" zueinander jeweils ohne Winkelversatz der jeweiligen Massenschwerpunkte um die Unwuchtachse U angeordnet, so dass im Rotationsbetrieb die zur Unwuchtachse U orthogonal wirkenden Fliehkräfte exakt in gleicher Richtung wirken und somit die hinsichtlich einer Biegung der Unwuchtwelle 12 kompensierende Wirkung entfalten.

Da zur Bereitstellung der Gesamtunwucht der Unwuchtanordnung 10 sich die durch die Unwuchtmassen 24, 26 und die Gegen-Unwuchtmassen 30, 30" eingeführten Unwuchten addieren, verteilt sich die gesamte zur Unwucht beitragende Masse der Unwuchtanordnung 10 auf vier Systembereiche, so dass jeder davon baulich kompakter ausgeführt werden kann, als in einem Fall, in welchem beispielsweise nur zwei Körper zur Erzeugung dieser Unwucht beitragen.

Hier ist darauf hinzuweisen, dass bei dem in Fig. 5 dargestellten Aufbau eine bezüglich eines jeweiligen Lagerbereichs 14, 16 symmetrische Anordnung der beidseits davon jeweils positionierten Unwuchtmassen 24, 26 bzw. Gegen-Unwuchtmassen 30, 30" nicht zwingend erforderlich ist. Beispielsweise könnten bei jedem derartigen Paar die Unwuchtmassen 24, 26 einen geringeren Abstand zum jeweils zugeordneten Lagerbereich 14 bzw. 16 aufweisen, als die zugehörige Gegen-Unwuchtmasse 30, 30", welche dann wiederum mit geringerer Masse aufgebaut sein können, um beidseits eines jeweiligen Lagerbereichs 14, 16 gleiche Hebelverhältnisse einzustellen. Auch müssen nicht notwendigerweise bei den beiden Paaren aus Unwuchtmassen 24, 26 und Gegen-Unwuchtmassen 30, 30" die Unwuchtmassen 24, 26 bezüglich des zugehörigen Lagebereichs 14 bzw. 16 mit gleichem Abstand positioniert sein, was dann bedingt, dass auch die beiden Gegen-Unwuchtmassen 30, 30" zum jeweils zugehörigen Lagerbereich 14 bzw. 16 unterschiedliche Axialabstände aufweisen können oder/und unterschiedliche Massen aufweisen können.

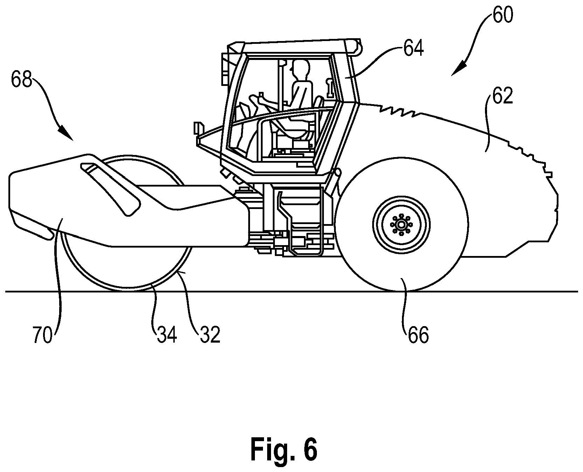

Die Fig. 6 zeigt in Seitenansicht eine als Bodenverdichter ausgebildete Bodenbearbeitungsmaschine 60, welche einen Hinterwagen 62 mit einer daran vorgesehenen Kabine 64 für eine Bedienperson, einem Antriebsaggregat und Antriebsrädern 66 umfasst. An einem bezüglich des Hinterwagens 62 um eine beispielsweise näherungsweise vertikale Achse verschwenkbaren Vorderwagen 68 bzw. einem Walzenrahmen 70 des Vorderwagens 68 ist beispielsweise die in Fig. 2 im Längsschnitt dargestellte Bodenbearbeitungswalze 32 drehbar getragen. Da bei dem in Fig. 6 dargestellten Aufbau die Bodenbearbeitungsmaschine 60 durch die Antriebsräder 66 zur Bewegung angetrieben wird, kann die Bodenbearbeitungswalze selbst ohne den vorangehend mit Bezug auf die Fig. 2 erläuterten Antrieb für diese aufgebaut sein.

In der Bodenbearbeitungswalze 32 kann dann eine erfindungsgemäß ausgebildete Unwuchtanordnung, wie sie vorangehend mit Bezug auf die Fig. 1 bis 5 detailliert beschrieben wurde, angeordnet sein.

Abschließend ist darauf hinzuweisen, dass bei den vorangehend beschriebenen Ausgestaltungsformen selbstverständlich bauliche Änderungen vorgenommen werden können, ohne vom Prinzip der vorliegenden Erfindung abzuweichen. So könnte beispielsweise bei dem in den Fig. 1 und 2 dargestellten Aufbau die Gegen-Unwuchtmassenanordnung auch mehr als eine einzige Gegen-Unwuchtmasse aufweisen. Die Unwuchtwelle könnte in mehr als zwei Lagerbereichen im Inneren einer Bodenbearbeitungswalze gelagert sein, wobei dann für jeden zwischen zwei derartigen Lagern sich erstreckenden Abschnitt der Unwuchtwelle, an welcher Unwuchtmassen wirken, eine der vorangehend beschriebenen Ausgestaltungen zum Vermeiden einer Biegung der Unwuchtwelle im Rotationsbetrieb vorgesehen sein kann.

## Patentansprüche

1. Unwuchtanordnung zur Erzeugung einer Krafteinwirkung auf eine Bodenbearbeitungswalze einer Bodenbearbeitungsmaschine, insbesondere Bodenverdichter, umfassend:
- eine in Richtung einer Unwuchtachse (U) langgestreckte und um die Unwuchtachse (U) drehbare Unwuchtwelle (12) mit wenigstens zwei in Richtung der Unwuchtachse (U) in Abstand zueinander angeordneten Lagerbereichen (14,16),
- eine Unwuchtmassenanordnung (22) mit wenigstens zwei in Richtung der Unwuchtachse (U) in Abstand zueinander angeordneten, an der Unwuchtwelle (12) vorgesehenen Unwuchtmassen (24, 26), wobei jede Unwuchtmasse (24, 26) einen zur Unwuchtachse (U) exzentrischen Massenschwerpunkt (M_{U1}, M_{U2}) aufweist,
- eine Gegen-Unwuchtmassenanordnung (28) mit wenigstens einer Gegen-Unwuchtmasse (30), wobei die wenigstens eine Gegen-Unwuchtmasse (30) einen zur Unwuchtachse (U) exzentrischen Massenschwerpunkt (M_{G1}) aufweist,
wobei der Massenschwerpunkt (M_{G1}) der wenigstens einen Gegen-Unwuchtmasse (30) eine von den Axiallagen der Massenschwerpunkte (M_{U1}, M_{U2}) der Unwuchtmassen (24, 26) sich unterscheidende Axiallage aufweist, und
wobei:
- ein Massenschwerpunkt (M_{G}) der Gegen-Unwuchtmassenanordnung (28) bezüglich eines Massenschwerpunkts (Mu) der Unwuchtmassenanordnung (22) mit Winkelversatz um die Unwuchtachse (U) angeordnet ist,
oder
- wenigstens einer der Lagerbereiche (14, 16) axial zwischen einer Gegen-Unwuchtmasse (30, 30") und einer der Unwuchtmassen (24, 26) angeordnet ist,
**dadurch gekennzeichnet, dass** wenigstens eine Unwuchtmasse (24') eine variable Unwuchtmasse mit bezüglich der Unwuchtachse (U) in Umfangsrichtung veränderbarer Masseverteilung ist,
dass wenigstens eine Gegen-Unwuchtmasse (30') eine variable Gegen-Unwuchtmasse (30') mit bezüglich der Unwuchtachse (U) in Umfangsrichtung veränderbarer Masseverteilung ist, und
dass die wenigstens eine Unwuchtmasse (24') und die wenigstens eine Gegen-Unwuchtmasse (30') jeweils an einem an der Unwuchtwelle (12) fest angebrachten Massebereich (50') ein Gehäuse (56') aufweisen, wobei in dem Gehäuse (56') ein in Umfangsrichtung um die Unwuchtachse (U) zwischen zwei durch Endbereiche des an der Unwuchtwelle (12) fest angebrachten Massebereichs (50') definierte Endstellungen bewegbarer Massebereich 58' aufgenommen ist, wobei bei Bewegung des bewegbaren Massebereichs (58') der wenigstens einen Unwuchtmasse (24') und des bewegbaren Massebereichs (58') der wenigstens einen Gegen-Unwuchtmasse (30') zwischen den beiden Endstellungen eine Lage des Masseschwerpunkts der wenigstens einen Unwuchtmasse (24') und eine Lage des Massenschwerpunkts der wenigstens einen Gegen-Unwuchtmasse (30') in Umfangsrichtung sich ändern und ein Radialabstand des Massenschwerpunkts der wenigstens einen Unwuchtmasse (24') und ein Radialabstand des Massenschwerpunkts der wenigstens einen Gegen-Unwuchtmasse (24') zur Unwuchtachse (U) sich ändern.

2. Unwuchtanordnung nach Anspruch 1,
**dadurch gekennzeichnet, dass** der Massenschwerpunkt (M_{G}) der Gegen-Unwuchtmassenanordnung (28) bezüglich des Massenschwerpunkts (Mu) der Unwuchtmassenanordnung (22) mit Winkelversatz um die Unwuchtachse (U) angeordnet ist, und dass die Unwuchtmassenanordnung (22) und die Gegen-Unwuchtmassenanordnung (28) axial zwischen einem ersten der Lagerbereiche (14, 16) und einem zweiten der Lagerbereiche (14, 16) angeordnet sind.

3. Unwuchtanordnung nach Anspruch 2,
**dadurch gekennzeichnet, dass** der Winkelversatz im Bereich von 180° ist.

4. Unwuchtanordnung nach Anspruch 2 oder 3,
**dadurch gekennzeichnet, dass** die Gegen-Unwuchtmassenanordnung (28) axial zwischen einer ersten der Unwuchtmassen (24, 26) und einer zweiten der Unwuchtmassen (24, 26) angeordnet ist.

5. Unwuchtanordnung nach Anspruch 4,
**dadurch gekennzeichnet, dass** ein Massenschwerpunkt (M_{U1}) der ersten Unwuchtmasse (24) zu dem ersten Lagerbereich (14) und ein Massenschwerpunkt (M_{U2}) der zweiten Unwuchtmasse (26) zu dem zweiten Lagerbereich (16) den gleichen Axialabstand (I₁) aufweisen.

6. Unwuchtanordnung nach Anspruch 4 oder 5
**dadurch gekennzeichnet, dass** ein Massenschwerpunkt (M_{U1}) der ersten Unwuchtmasse (24) und ein Massenschwerpunkt (M_{U2}) der zweiten Unwuchtmasse (26) bezüglich einander keinen Winkelversatz um die Unwuchtachse (U) aufweisen.

7. Unwuchtanordnung nach einem der Ansprüche 2-5,
**dadurch gekennzeichnet, dass** der Massenschwerpunkt (M_{G}) der Gegen-Unwuchtmassenanordnung (28) zu dem ersten Lagerbereich (14) und dem zweiten Lagerbereich (16) den gleichen Axialabstand (I₂) aufweist.

8. Unwuchtanordnung nach einem der Ansprüche 2-6,
**dadurch gekennzeichnet, dass** bei Rotation der Unwuchtwelle (12) eine an der Gegen-Unwuchtmassenanordnung (28) wirkende Fliehkraft kleiner ist als eine an der Unwuchtmassenanordnung (22) wirkende Fliehkraft.

9. Unwuchtanordnung nach Anspruch 1,
**dadurch gekennzeichnet, dass** der wenigstens eine der Lagerbereiche (14, 16) axial zwischen einer Gegen-Unwuchtmasse (30, 30") und einer der Unwuchtmassen (24, 26) angeordnet ist, und dass ein Massenschwerpunkt dieser Unwuchtmasse (24, 26) und ein Massenschwerpunkt dieser Gegen-Unwuchtmasse (30, 30") bezüglich einander keinen Winkelversatz um die Unwuchtachse (U) aufweisen.

10. Unwuchtanordnung nach Anspruch 9,
**dadurch gekennzeichnet, dass** ein erster der Lagerbereiche (14, 16) und ein zweiter der Lagerbereiche (14, 16) jeweils axial zwischen wenigstens einer der Unwuchtmassen (24, 26) und wenigstens einer Gegen-Unwuchtmasse (30, 30") angeordnet sind.

11. Unwuchtanordnung nach einem der Ansprüche 1-10,
**dadurch gekennzeichnet, dass** jede Unwuchtmasse (24') eine variable Unwuchtmasse mit bezüglich der Unwuchtachse (U) in Umfangsrichtung veränderbarer Masseverteilung ist, und dass jede Gegen-Unwuchtmasse (30') eine variable Gegen-Unwuchtmasse (30') mit bezüglich der Unwuchtachse (U) in Umfangsrichtung veränderbarer Masseverteilung ist.

12. Bodenbearbeitungswalze für eine Bodenbearbeitungsmaschine, insbesondere Bodenverdichter, umfassend einen in Richtung einer Walzendrehachse (D) langgestreckten und einen Walzeninnenraum (36) umgebenden Walzenmantel (34) und wenigstens eine in dem Walzeninnenraum (36) angeordnete Unwuchtanordnung (10) nach einem der vorangehenden Ansprüche.

13. Bodenbearbeitungswalze nach Anspruch 12,
**dadurch gekennzeichnet, dass** der Unwuchtwelle (12) ein Unwuchtantrieb (42) zum Antreiben der Unwuchtwelle (12) zur Drehung um die Unwuchtachse (U) zugeordnet ist.

14. Bodenbearbeitungswalze nach Anspruch 12 oder 13,
**dadurch gekennzeichnet, dass** die Unwuchtachse (U) der Walzendrehachse (D) entspricht.

15. Bodenbearbeitungsmaschine, insbesondere Bodenverdichter, umfassend eine Bodenbearbeitungswalze (32) nach einem der Ansprüche 12-14.

## Claims

1. Unbalance arrangement for generating a force effect on a soil processing roller of a soil processing machine, in particular a soil compactor, comprising:
- an unbalance shaft (12) elongated in the direction of an unbalance axis (U) and rotatable about the unbalance axis (U), with at least two bearing regions (14, 16) arranged at a distance from one another in the direction of the unbalance axis (U),
- an unbalance mass arrangement (22) with at least two unbalance masses (24, 26) arranged at a distance from one another in the direction of the unbalance axis (U) and provided on the unbalance shaft (12), wherein each unbalance mass (24, 26) has a centre of gravity (M_{U1}, M_{U2}) which is eccentric in relation to the unbalance axis (U),
- a counter-unbalance mass arrangement (28) with at least one counter-unbalance mass (30), wherein the at least one counter-unbalance mass (30) presents a centre of mass (M_{G1}) eccentric to the unbalance axis (U),
wherein the centre of mass (M_{G1}) of the at least one counter-unbalance mass (30) has an axial position differing from the axial positions of the centres of mass (M_{U1}, M_{U2}) of the unbalance masses (24, 26), and
wherein:
- a centre of mass (M_{G}) of the counter-unbalance mass arrangement (28) is arranged with angular offset about the unbalance axis (U) with respect to a centre of mass (Mu) of the unbalance mass arrangement (22),
or
- at least one of the bearing regions (14, 16) is arranged axially between a counter-unbalance mass (30, 30") and one of the unbalance masses (24, 26),
**characterized in that** at least one unbalance mass (24') is a variable unbalance mass with a mass distribution which is variable in the circumferential direction with respect to the unbalance axis (U),
**in that** at least one counter-unbalance mass (30') is a variable counter-unbalance mass (30') with a mass distribution which can be varied in the circumferential direction with respect to the unbalance axis (U), and
**in that** the at least one unbalance mass (24') and the at least one counter-unbalance mass (30') each have a housing (56') on a mass region (50') which is fixedly attached to the unbalance shaft (12), wherein a mass region 58' movable in the circumferential direction about the unbalance axis (U) between two end positions defined by end regions of the mass region (50') fixedly attached to the unbalance shaft (12) is received in the housing (56'), wherein, upon movement of the movable mass region (58') of the at least one unbalance mass (24') and of the movable mass region (58') of the at least one counter-unbalance mass (30') between the two end positions, a position of the centre of gravity of the at least one unbalance mass (24') and a position of the centre of gravity of the at least one counter-unbalance mass (30') change in the circumferential direction and a radial distance of the centre of gravity of the at least one unbalance mass (24') and a radial distance of the centre of gravity of the at least one counter-unbalance mass (24') from the unbalance mass axis (U) change.

2. Unbalance arrangement according to claim 1,
**characterized in that** the centre of mass (M_{G}) of the counter-unbalance mass arrangement (28) is arranged with angular offset about the unbalance axis (U) with respect to the centre of mass (Mu) of the unbalance mass arrangement (22), and **in that** the unbalance mass arrangement (22) and the counter-unbalance mass arrangement (28) are arranged axially between a first of the bearing regions (14, 16) and a second of the bearing regions (14, 16).

3. Unbalance arrangement according to claim 2,
**characterized in that** the angular offset is in the range of 180°.

4. Unbalance arrangement according to claim 2 or 3,
**characterized in that** the counter-unbalance mass arrangement (28) is arranged axially between a first of the unbalance masses (24, 26) and a second of the unbalance masses (24, 26).

5. Unbalance arrangement according to claim 4,
**characterized in that** a centre of mass (M_{U1}) of the first unbalance mass (24) relative to the first bearing region (14) and a centre of mass (M_{U2}) of the second unbalance mass (26) relative to the second bearing region (16) have the same axial distance (I₁).

6. Unbalance arrangement according to claim 4 or 5,
**characterized in that** a centre of mass (M_{U1}) of the first unbalance mass (24) and a centre of mass (M_{U2}) of the second unbalance mass (26) have no angular offset with respect to one another about the unbalance axis (U).

7. Unbalance arrangement according to one of claims 2-5,
**characterized in that** the centre of mass (M_{G}) of the counter-unbalance mass arrangement (28) has the same axial distance (I₂) from the first bearing region (14) and the second bearing region (16).

8. Unbalance arrangement according to any one of claims 2-6,
**characterized in that** during rotation of the unbalance shaft (12) a centrifugal force acting on the counter-unbalance mass arrangement (28) is smaller than a centrifugal force acting on the unbalance mass arrangement (22).

9. Unbalance arrangement according to claim 1,
**characterized in that** the at least one of the bearing regions (14, 16) is arranged axially between a counter-unbalance mass (30, 30") and one of the unbalance masses (24, 26), and **in that** a centre of mass of this unbalance mass (24, 26) and a centre of mass of this counter-unbalance mass (30, 30") have no angular offset with respect to one another about the unbalance axis (U).

10. Unbalance arrangement according to claim 9,
**characterized in that** a first of the bearing regions (14, 16) and a second of the bearing regions (14, 16) are each arranged axially between at least one of the unbalance masses (24, 26) and at least one counter-unbalance mass (30, 30").

11. Unbalance arrangement according to one of claims 1-10,
**characterized in that** each unbalance mass (24') is a variable unbalance mass with a mass distribution variable in the circumferential direction with respect to the unbalance axis (U), and **in that** each counter-unbalance mass (30') is a variable counter-unbalance mass (30') with a mass distribution variable in the circumferential direction with respect to the unbalance axis (U).

12. Soil processing roller for a soil processing machine, in particular a soil compactor, comprising a roller shell (34) which is elongated in the direction of an axis of rotation (D) of the roller and surrounds a roller interior (36), and at least one unbalance arrangement (10) arranged in the roller interior (36) according to one of the preceding claims.

13. Soil processing roller according to claim 12,
**characterized in that** an unbalance drive (42) is associated with the unbalance shaft (12) for driving the unbalance shaft (12) to rotate about the unbalance axis (U).

14. Soil processing roller according to claim 12 or 13,
**characterized in that** the unbalance axis (U) corresponds to the roller rotation axis (D).

15. Soil processing machine, in particular soil compactor, comprising a soil processing roller (32) according to any one of claims 12-14.

## Revendications

1. Ensemble de balourd pour générer une action de force sur un rouleau de traitement du sol d'une machine de traitement du sol, en particulier un compacteur de sol, comprenant :
- un arbre de balourd (12) allongé dans la direction d'un axe de balourd (U) et pouvant tourner autour de l'axe de balourd (U), avec au moins deux zones de palier (14, 16) disposées à distance l'une de l'autre dans la direction de l'axe de balourd (U),
- un ensemble de masses de balourd (22) avec au moins deux masses de balourd (24, 26) prévues sur l'arbre de balourd (12) et disposées à distance l'une de l'autre dans la direction de l'axe de balourd (U), dans lequel chaque masse de balourd (24, 26) présente un centre de gravité de masse (M_{U1}, M_{U2}) excentré par rapport à l'axe de balourd (U),
- un ensemble de masse de contre-balourd (28) avec au moins une masse de contre-balourd (30), dans lequel ledit au moins une masse de contre-balourd (30) présente un centre de gravité de masse (M_{G1}) excentré par rapport à l'axe de balourd (U),
dans lequel le centre de gravité de masse (M_{G1}) dudit au moins une masse de contre-balourd (30) présente une position axiale différente des positions axiales des centres de gravité de masse (M_{U1}, M_{U2}) des masses de contre-balourd (24, 26), et dans lequel :
- un centre de gravité de masse (M_{G}) de l'ensemble de masse de contre-balourd (28) est disposé par rapport à un centre de gravité de masse (Mu) de l'ensemble de masse de contre-balourd (22) avec un décalage angulaire autour de l'axe de contre-balourd (U),
ou
- au moins une des zones de palier (14, 16) est disposée axialement entre une masse de contre-balourd (30, 30") et une des masses de balourd (24, 26),
**caractérisé en ce qu'**au moins une masse de balourd (24') est une masse de balourd variable avec une répartition de masse modifiable dans la direction circonférentielle par rapport à l'axe de balourd (U),
**en ce qu'**au moins une masse de contre-balourd (30') est une masse de contre-balourd variable (30') avec une répartition de masse variable dans la direction circonférentielle par rapport à l'axe de balourd (U), et
**en ce que** ladite au moins une masse de balourd (24') et ladite au moins une masse de contre-balourd (30') présentent chacune un boîtier (56') sur une zone de masse (50') montée fixement sur l'arbre de balourd (12), dans lequel une zone de masse (58') mobile dans la direction circonférentielle autour de l'axe de balourd (U) entre deux positions d'extrémité définies par des zones d'extrémité de la zone de masse (50') montée fixement sur l'arbre de balourd (12) est logée dans le boîtier (56'), dans lequel, lors du déplacement de la zone de masse mobile (58') de ladite au moins une masse de balourd (24') et de la zone de masse mobile (58') de ladite au moins une masse de contre-balourd (30') entre les deux positions d'extrémité, une position du centre de gravité de masse de ladite au moins une masse de balourd (24') et une position du centre de gravité de masse de ladite au moins une masse de contre-balourd (30') varient dans la direction circonférentielle et une distance radiale du centre de gravité de masse de ladite au moins une masse de balourd (24') et une distance radiale du centre de gravité de masse de ladite au moins une masse de contre-balourd (24') varient par rapport à l'axe de balourd (U).

2. Ensemble de balourd selon la revendication 1,
**caractérisé en ce que** le centre de gravité de masse (M_{G}) de l'ensemble de masse de contre-balourd (28) est disposé avec un décalage angulaire autour de l'axe de balourd (U) par rapport au centre de gravité de masse (Mu) de l'ensemble de masse de contre-balourd (22), et **en ce que** l'ensemble de masse de contre-balourd (22) et l'ensemble de masse de contre-balourd (28) sont disposés axialement entre une première des zones de palier (14, 16) et une deuxième des zones de palier (14, 16).

3. Ensemble de balourd selon la revendication 2,
**caractérisé en ce que** le décalage angulaire est de l'ordre de 180°.

4. Ensemble de balourd selon la revendication 2 ou 3,
**caractérisé en ce que** l'ensemble de masse de contre-balourd (28) est disposé axialement entre une première des masses de balourd (24, 26) et une deuxième des masses de balourd (24, 26).

5. Ensemble de balourd selon la revendication 4,
**caractérisé en ce qu'**un centre de gravité de masse (M_{U1}) de la première masse de balourd (24) par rapport à la première zone de palier (14) et un centre de gravité de masse (M_{U2}) de la deuxième masse de balourd (26) par rapport à la deuxième zone de palier (16) présentent la même distance axiale (I₁).

6. Ensemble de balourd selon la revendication 4 ou 5,
**caractérisé en ce qu'**un centre de gravité de masse (M_{U1}) de la première masse de balourd (24) et un centre de gravité de masse (M_{U2}) de la deuxième masse de balourd (26) ne présentent pas de décalage angulaire l'un par rapport à l'autre autour de l'axe de balourd (U).

7. Ensemble de balourd selon l'une des revendications 2 à 5,
**caractérisé en ce que** le centre de gravité de masse (M_{G}) de l'ensemble de masse de contre-balourd (28) présente la même distance axiale (I₂) par rapport à la première zone de palier (14) et à la deuxième zone de palier (16).

8. Ensemble de balourd selon l'une des revendications 2 à 6,
**caractérisé en ce que,** lors de la rotation de l'arbre de balourd (12), une force centrifuge agissant sur l'ensemble de masse de contre-balourd (28) est inférieure à une force centrifuge agissant sur l'ensemble de masse de balourd (22).

9. Ensemble de balourd selon la revendication 1,
**caractérisé en ce que** ladite au moins une desdites zones de palier (14, 16) est disposée axialement entre une masse de contre-balourd (30, 30") et une desdites masses de balourd (24, 26), et **en ce qu'**un centre de masse de ladite masse de balourd (24, 26) et un centre de masse de ladite masse de contre-balourd (30, 30") ne présentent pas de décalage angulaire l'un par rapport à l'autre autour dudit axe de balourd (U).

10. Ensemble de balourd selon la revendication 9,
**caractérisé en ce qu'une** première desdites zones de palier (14, 16) et une deuxième desdites zones de palier (14, 16) sont respectivement disposées axialement entre au moins une desdites masses de balourd (24, 26) et au moins une masse de contre-balourd (30, 30").

11. Ensemble de balourd selon l'une des revendications 1 à 10,
**caractérisé en ce que** chaque masse de balourd (24') est une masse de balourd variable avec une répartition de masse variable par rapport à l'axe de balourd (U) dans la direction circonférentielle, et **en ce que** chaque masse de contre-balourd (30') est une masse de contre-balourd variable (30') avec une répartition de masse variable par rapport à l'axe de balourd (U) dans la direction circonférentielle.

12. Rouleau de traitement du sol pour une machine de traitement du sol, en particulier un compacteur de sol, comprenant une enveloppe de rouleau (34) allongée dans la direction d'un axe de rotation de rouleau (D) et entourant un espace intérieur de rouleau (36), et au moins un ensemble de balourd (10) disposé dans l'espace intérieur de rouleau (36) selon l'une des revendications précédentes.

13. Rouleau de traitement du sol selon la revendication 12,
**caractérisé en ce qu'un** entraînement de balourd (42) est associé à l'arbre de balourd (12) pour entraîner l'arbre de balourd (12) en rotation autour de l'axe de balourd (U).

14. Rouleau de traitement du sol selon la revendication 12 ou 13,
**caractérisé en ce que** l'axe de balourd (U) correspond à l'axe de rotation de rouleau (D).

15. Machine de traitement du sol, notamment compacteur de sol, comprenant un rouleau de traitement du sol (32) selon l'une des revendications 12 à 14.
